(19) Europäisches Patentamt / European Patent Office / Office européen des brevets

(11) **EP 3 607 430 B1**

(12) **FASCICULE DE BREVET EUROPEEN**

(45) Date de publication et mention
de la délivrance du brevet:
**18.05.2022 Bulletin 2022/20**

(21) Numéro de dépôt: **18713992.8**

(22) Date de dépôt: **04.04.2018**

(51) Classification Internationale des Brevets (IPC):
**G01S 7/24** *(2006.01)*

(52) Classification Coopérative des Brevets (CPC):
**G06F 3/147; G01S 7/20; G01S 7/24; G09G 5/14;**
G09G 2354/00

(86) Numéro de dépôt international:
**PCT/EP2018/058619**

(87) Numéro de publication internationale:
**WO 2018/185169 (11.10.2018 Gazette 2018/41)**

(54) **PROCÉDÉ ET SYSTÈME DE DÉTERMINATION DE PÉRIODICITÉ DE DONNÉES**

VERFAHREN UND SYSTEM ZUR BESTIMMUNG DER PERIODIZITÄT VON DATEN

METHOD AND SYSTEM FOR DETERMINING PERIODICITY OF DATA

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **04.04.2017 FR 1700357**

(43) Date de publication de la demande:
**12.02.2020 Bulletin 2020/07**

(73) Titulaire: **Thales**
**92400 Courbevoie (FR)**

(72) Inventeur: **CANTU, Alma**
**29238 Brest Cedex 2 (FR)**

(74) Mandataire: **Lavoix**
**2, place d'Estienne d'Orves**
**75441 Paris Cedex 09 (FR)**

(56) Documents cités:
**US-A- 2 637 023        US-A1- 2015 204 973**
**US-A1- 2016 026 253**

**Description**

La présente invention concerne un procédé et un système de détermination de périodicité de données.

L'invention se situe dans le domaine du traitement et de la caractérisation de grandes quantités de données complexes.

Le traitement de données complexes présentant des périodicités est un problème dans divers domaines techniques, en particulier dans le domaine du traitement du signal. Dans diverses applications pratiques, un système reçoit une pluralité de signaux périodiques ou cyclostationnaires, imbriqués et/ou bruités. Par exemple, il peut s'agir de signaux radioélectriques issus de divers émetteurs et reçus sous forme mélangée et dans un intervalle de temps court par un dispositif récepteur.

Chaque signal est dans ce cas représenté par un ensemble de données, par exemple par un ensemble d'impulsions, chaque donnée étant caractérisée par plusieurs attributs. Il existe de nombreuses applications dans lesquelles il est utile d'extraire un sous-ensemble de données correspondant à un même signal et présentant une périodicité selon au moins un des attributs, avec une période moyenne associée.

Il existe des méthodes calculatoires pour réaliser cet objectif, mais en général de telles méthodes sont d'une grande complexité calculatoire et ne sont pas adaptées pour le traitement de grandes quantités de données complexes, en particulier pour le traitement de signaux bruités.

Dans certains domaines techniques, comme par exemple le traitement de signaux radiofréquence, un opérateur peut être amené à intervenir pour détecter des répétitions, par exemple à l'aide d'outils de visualisation en deux dimensions, comme des graphiques 2D représentant un attribut du signal dont on cherche à déterminer la périodicité représenté en fonction du temps. Cependant, les outils de visualisation connus n'apportent pas d'aide spécifique pour la détection de répétitions, qui doit être faite par l'opérateur uniquement par l'inspection visuelle de graphiques ou de tableaux bidimensionnels. Ce travail est fastidieux pour un opérateur. Le document US2015/204973 est une demande de brevet concernant la détection de présence d'oiseaux dans un volume 3D, typiquement autour d'un aéronef en vol, par l'utilisation d'un système radar de détection.

Le document US2016/026253 est une demande de brevet qui se situe dans le domaine des méthodes et systèmes pour créer une réalité virtuelle et une réalité augmentée. US2016/026253 décrit nombre de méthodes d'affichage de type immersif, l'utilisateur portant un casque de réalité virtuelle.

L'invention a pour objet de réduire les inconvénients des méthodes connues, en proposant un procédé et un système facilitant la détection de périodicité par un opérateur, dans des données complexes et en grande quantité, et de déterminer un une période moyenne associée.

A cet effet, l'invention propose un procédé de détermination de périodicité de données caractérisées par une pluralité d'attributs, au moins un sous ensemble des données comportant une périodicité associée à un des attributs. Le procédé comporte des étapes de :

- obtention des valeurs d'attribut caractérisant chaque donnée à traiter,
- sélection d'un premier attribut, et calcul, pour chaque donnée à traiter, de coordonnées dans un référentiel cylindrique, les coordonnées comportant une valeur angulaire en fonction de la valeur dudit premier attribut pour la donnée à traiter et d'un coefficient de périodicité, et une hauteur,
- affichage d'objets d'affichage sur un cylindre d'affichage tridimensionnel, chaque objet d'affichage correspondant à une donnée à traiter et étant positionné sur le cylindre d'affichage en fonction des coordonnées calculées, au moins un secteur du cylindre d'affichage tridimensionnel étant visualisable par un opérateur,
- en réponse à une commande d'enroulement des objets d'affichage sur le cylindre d'affichage, modification du coefficient de périodicité en un coefficient de périodicité courant et rafraîchissement de l'affichage,
- obtention d'un groupe d'objets d'affichage sélectionné formant sensiblement un motif géométrique prédéterminé, ledit groupe d'objets d'affichage correspondant à un sous-ensemble de données présentant une périodicité selon le premier attribut.

Avantageusement, la représentation des données sous forme d'objets d'affichage dans un référentiel cylindrique, la visualisation en trois dimensions et le rafraîchissement de l'affichage suite à une commande d'opérateur permettent de détecter visuellement des groupes d'objets d'affichage formant sensiblement un motif géométrique et correspondant à un sous-ensemble de données présentant une périodicité. Avantageusement, la détection de périodicité est robuste au bruit.

Dans un mode de réalisation, les données traitées sont des données représentatives de signaux périodiques imbriqués et/ou bruités.

Le procédé de détermination de périodicité selon l'invention peut également présenter une ou plusieurs des caractéristiques ci-dessous, prises indépendamment ou selon toutes les combinaisons techniquement acceptables.

Le motif géométrique est un alignement vertical, et le sous-ensemble de données correspondant au groupe d'objets d'affichage sélectionné a une période moyenne selon le premier attribut de valeur égale au coefficient de périodicité courant.

Le motif géométrique est un motif récurrent continu de type sinusoïdal, en triangles ou en dents de scie correspondant à une modulation périodique du premier attribut.

La hauteur dans le référentiel cylindrique est calculée par une fonction affine de la valeur dudit premier attribut.

Le procédé comporte la sélection d'au moins un deuxième attribut parmi la pluralité d'attributs caractérisant les données, et l'association d'une caractéristique visuelle distinctive à chaque objet d'affichage en fonction du deuxième attribut sélectionné.

Les objets d'affichage sélectionnés pour former un groupe ont une même caractéristique visuelle distinctive associée à un deuxième attribut sélectionné.

Les objets d'affichage sont affichés dans un espace d'affichage tridimensionnel principal, le procédé comportant en outre, après la sélection d'un groupe d'objets d'affichage, le déplacement du groupe d'objets d'affichage vers un espace d'affichage tridimensionnel secondaire distinct de l'espace d'affichage tridimensionnel principal.

Le procédé comporte en outre un affichage détaillé de valeurs d'attributs associées au groupe d'objets d'affichage sélectionné.

La commande d'enroulement des objets d'affichage sur le cylindre d'affichage est effectuée de manière quasi continue par l'opérateur, et le rafraîchissement de l'affichage est effectué sensiblement en temps réel.

Le procédé comporte en outre une réception de commande indiquant un nombre de groupes d'objets d'affichage à regrouper, suivie d'un calcul d'un coefficient de périodicité modifié en fonction du nombre indiqué et d'un rafraîchissement de l'affichage.

Les données à traiter sont représentatives d'impulsions de signaux

L'affichage est un affichage d'immersion dans un environnement virtuel tridimensionnel, le point de vue de l'opérateur étant situé à l'intérieur du cylindre d'affichage.

Selon un autre aspect, l'invention concerne un système de détermination de périodicité de données caractérisées par une pluralité d'attributs, au moins un sous ensemble des données comportant un motif de répétition associé à un des attributs. Ce système comporte une interface homme-machine comportant un dispositif de visualisation permettant une visualisation en trois dimensions, et un dispositif d'interaction permettant de recevoir des commandes d'un opérateur, et un dispositif de calcul et de commande connecté à l'interface homme-machine et adapté à commander l'affichage.

Le dispositif de calcul et de commande comporte au moins un processeur adapté à mettre en oeuvre des modules pour:

- obtenir des valeurs d'attribut caractérisant chaque donnée à traiter,
- déterminer un premier attribut, et calculer, pour chaque donnée à traiter, des coordonnées dans un référentiel cylindrique, les coordonnées comportant une valeur angulaire en fonction de la valeur dudit premier attribut pour la donnée à traiter et d'un coefficient de périodicité, et une hauteur,

- commander l'affichage d'objets d'affichage sur un cylindre d'affichage tridimensionnel, chaque objet d'affichage correspondant à une donnée à traiter et étant positionné sur le cylindre d'affichage en fonction des coordonnées calculées, au moins un secteur du cylindre d'affichage tridimensionnel étant visualisable par un opérateur,
- recevoir du dispositif d'interaction une commande d'enroulement des objets d'affichage sur le cylindre d'affichage, et en réponse à ladite commande d'enroulement, calculer un coefficient de périodicité courant et commander le rafraîchissement de l'affichage,
- recevoir du dispositif d'interaction une commande de sélection d'un groupe d'objets d'affichage formant sensiblement un motif géométrique prédéterminé, ledit groupe d'objets d'affichage correspondant à un sous-ensemble de données présentant une périodicité selon le premier attribut.

Selon un mode de réalisation, le dispositif de visualisation est un dispositif d'immersion dans un environnement virtuel tridimensionnel, et le dispositif d'interaction comporte au moins une manette de pointage et de sélection d'objets d'affichage dans l'environnement virtuel.

Selon un mode de réalisation, le point de vue de l'opérateur est situé à l'intérieur du cylindre d'affichage.

D'autres caractéristiques et avantages de l'invention ressortiront de la description qui en est donnée ci-dessous, à titre indicatif et nullement limitatif, en référence aux figures annexées, parmi lesquelles :

- la figure 1 illustre schématiquement un système selon un mode de réalisation dans un contexte de mise en oeuvre de l'invention ;
- la figure 2 représente un dispositif de visualisation porté par un opérateur, selon un mode de réalisation de l'invention ;
- la figure 3 est un synoptique des principales étapes d'un procédé de détermination de périodicité de données selon un mode de réalisation de l'invention ;
- la figure 4 illustre schématiquement un référentiel cylindrique de représentation de données ;
- les figures 5, 6 et 7 représentent schématiquement un environnement d'affichage tridimensionnel dans un système de détermination de périodicité selon un mode de réalisation.

L'invention sera décrite ci-après dans le contexte du traitement de données périodiques qui sont signaux périodiques radioélectriques, par exemple des trains d'impulsions radar imbriquées et/ou bruités.

Bien entendu, l'invention ne se limite pas à ce domaine d'application particulier, et s'applique plus généralement pour le traitement de tout type de données présentant des périodicités et qui sont fournies en grande quantités, éventuellement bruitées ou entachées d'erreurs.

Par exemple, l'invention s'applique dans la détermination d'anomalies de répétition périodique dans des signaux d'électrocardiogrammes, ou de toutes autres séries de données associées à des chaînes de traitement cycliques.

Dans l'exemple détaillé décrit, chaque signal radioélectrique, périodique ou cyclostationnaire, est caractérisé par un train d'impulsions, chaque impulsion étant une donnée et ayant plusieurs attributs associés.

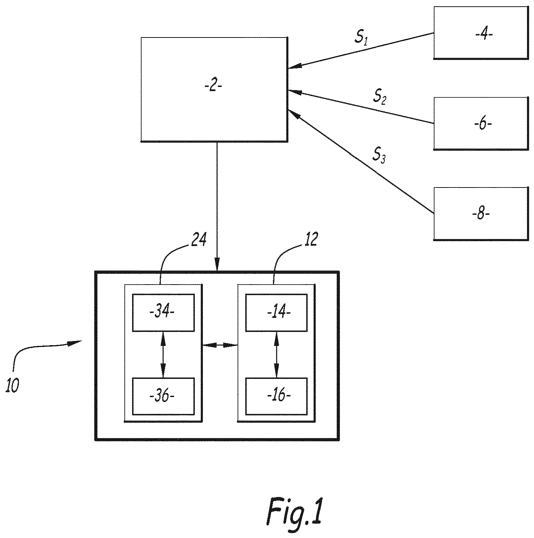

La figure 1 illustre un système de détermination de périodicité permettant une séparation de signaux périodiques imbriqués et/ou bruités dans un contexte applicatif, les signaux traités étant des signaux radioélectriques.

Un dispositif 2 de réception de signaux radioélectriques reçoit des signaux radioélectriques $S_1$, $S_2$, $S_3$ en provenance d'une pluralité de dispositifs d'émission 4, 6, 8. Le dispositif de réception 2 est équipé de capteurs appropriés.

Les signaux radioélectriques $S_1$, $S_2$, $S_3$ sont chacun composés d'impulsions dans le cas des signaux radar, chaque impulsion étant une donnée caractérisée par plusieurs d'attributs.

Chaque signal $S_i$ est un signal périodique présentant une répétition selon un des attributs avec une période de répétition donnée. La période de répétition peut être sensiblement constante et égale à une période moyenne, ou présenter une variation régulière, par exemple sinusoïdale ou en dents de scie, autour d'une période moyenne.

Au niveau du dispositif de réception, les impulsions reçues de tous les signaux présents sont mélangées dans le temps. Il est possible que certaines impulsions soient perdues, ou bruitées, ou que la période de répétition fluctue de manière aléatoire ou pseudo-aléatoire autour d'une valeur moyenne.

Dans le cas d'un signal radioélectrique, chaque impulsion est caractérisée par plusieurs attributs ayant des valeurs mesurées ou calculées.

Par exemple, dans le cas des signaux radioélectriques, chaque impulsion est caractérisée par une date d'arrivée, une fréquence d'émission, une durée d'impulsion et un niveau de réception associé. D'autres attributs comme la direction d'arrivée du signal ou la position de l'émetteur peuvent également être utilisés.

Les ensembles de données représentatifs des signaux reçus sont transmis à un système 10 de détermination de périodicité.

Le système 10 met en oeuvre des interactions avec un opérateur.

Le système 10 comprend une interface homme-machine 12, qui comporte un dispositif de visualisation 14 permettant une visualisation spatialisée en trois dimensions, et un ou plusieurs dispositifs d'interaction 16 permettant de recevoir des commandes d'un opérateur.

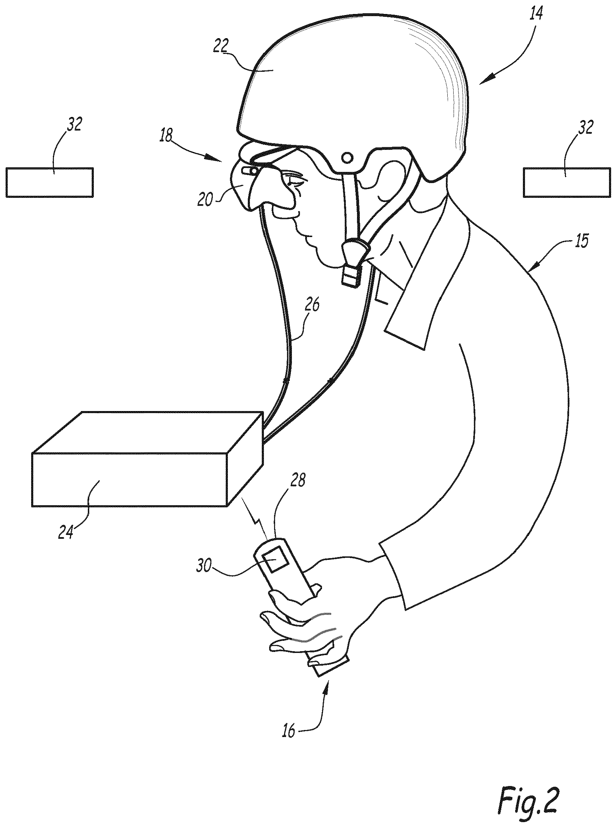

Dans un mode de réalisation, illustré schématiquement à la figure 2, le dispositif de visualisation 14 est un dispositif d'immersion dans un environnement virtuel tridimensionnel, par exemple un visiocasque 18 de réalité virtuelle, également appelé HMD (pour « Head Mounted Display » en anglais). Un tel dispositif comporte un ou plusieurs écrans d'affichage, supportés par un support 20 positionnable devant les yeux de l'opérateur 15, comme des lunettes. Le support 20 est lui-même porté par un casque 22. En variante le casque 22 se limite à un ensemble de sangles de support permettant de maintenir le dispositif sur la tête de l'opérateur 15.

Un tel dispositif de visualisation 14 permet à l'opérateur d'être immergé dans un environnement d'affichage tridimensionnel.

Le visiocasque 18 est connecté à un dispositif de calcul et de commande d'affichage 24 par des moyens de connexion filaire 26.

En variante, les moyens de connexion 26 peuvent être des moyens de communication sans fil.

De plus, l'opérateur dispose d'une manette ou télécommande 28, permettant de pointer et de commander l'affichage.

En variante, l'opérateur dispose de plusieurs manettes 28, afin de multiplier les possibilités d'interaction.

La manette 28 de la figure 2 est un exemple de dispositif d'interaction 16.

Le dispositif d'interaction 16 est muni d'un module de communication sans fil 30, adapté à communiquer avec un module adéquat (non représenté) du dispositif de calcul et de commande 24.

L'opérateur porteur d'un tel visiocasque 18 a un champ visuel défini par sa position spatiale, la ligne de regard et un angle de vision.

De préférence, le dispositif de visualisation 14 comporte également un ou plusieurs capteurs 32, adaptés à déterminer la position spatiale du porteur du visiocasque, afin de rafraîchir l'affichage en fonction de cette position spatiale.

Par conséquent, un tel dispositif de visualisation 14 permet une visualisation à 360° autour du porteur du visiocasque 18.

Dans une variante de réalisation, le dispositif de visualisation 14 comprend un ou plusieurs écrans d'affichage et des lunettes de visualisation stéréoscopique.

Selon une autre variante, le dispositif de visualisation 14 comprend un écran d'affichage d'images tridimensionnelles, visibles par un opérateur placé dans une position donnée par rapport à l'écran d'affichage, sans port de lunettes spécifiques.

Bien entendu, tout autre dispositif de visualisation tridimensionnelle connu est utilisable.

De retour à la figure 1, le dispositif de calcul et de commande 24 est par exemple un ordinateur, comportant un ou plusieurs processeurs de calcul 34, aptes à exécuter des instructions de code exécutable lorsque le dispositif 24 est mis sous tension, et un module 36 de stockage de données, en particulier d'instructions de code exécutable. Le dispositif 24 comporte également des moyens de communication avec le dispositif de visualisation 14, par exemple une connexion filaire 26 et/ou un émetteur/récepteur permettant une communication sans fil avec le dispositif d'interaction 16.

Tout système de communication sans fil de courte portée est utilisable, par exemple Bluetooth, Wifi.

Selon une variante, le dispositif de calcul et de commande 24 est réalisé sous forme de carte programmée de type ASIC.

Avantageusement, l'invention propose de représenter des attributs des données à traiter dans un référentiel cylindrique, et de permettre à l'opérateur d'agir interactivement sur des paramètres de la représentation pour détecter une périodicité d'un attribut sélectionné.

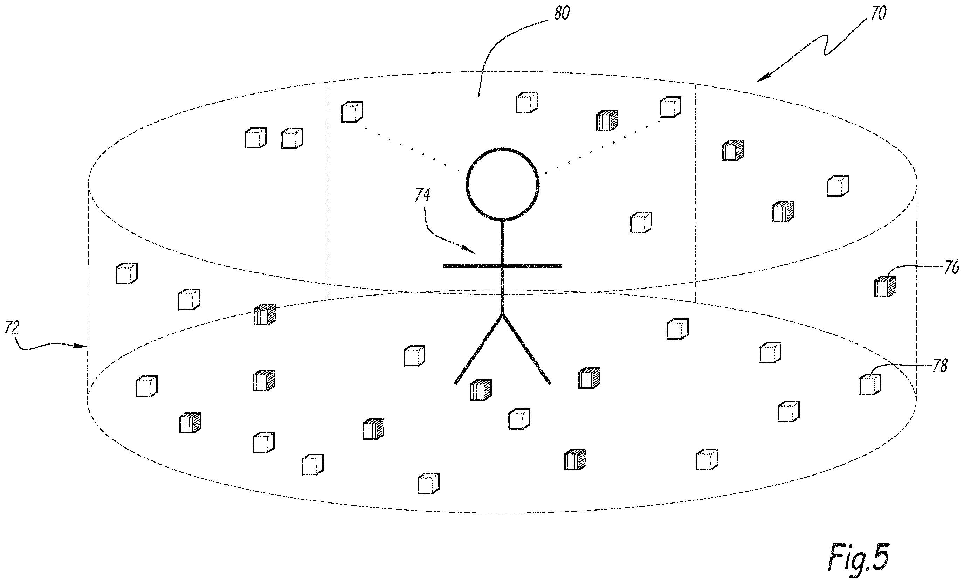

De préférence, l'opérateur est placé à l'intérieur du référentiel cylindrique de représentation. Lorsque le dispositif de visualisation est un dispositif d'immersion, l'opérateur est entouré par le référentiel de représentation des données, comme illustré schématiquement dans les figures 5, 6 et 7.

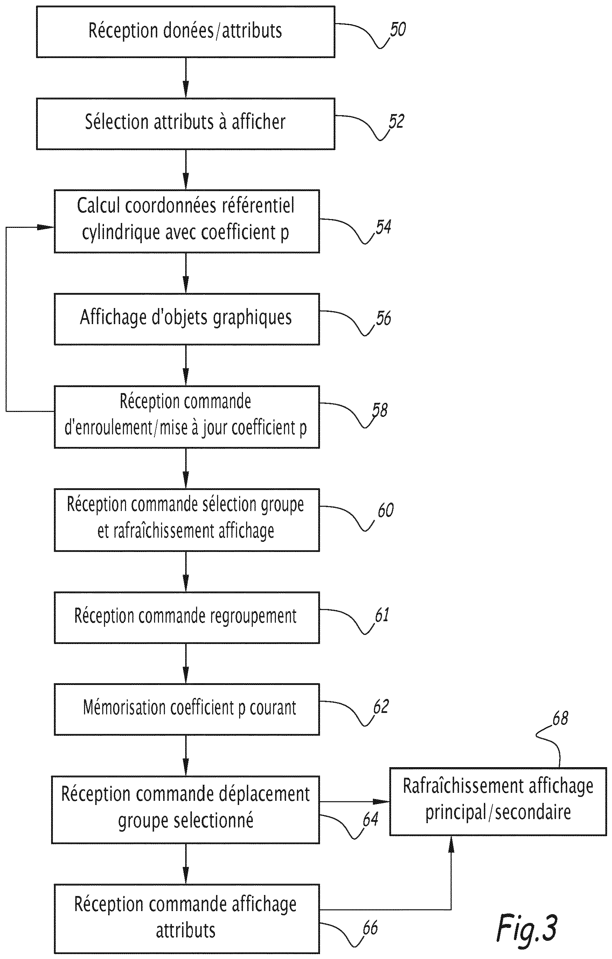

La figure 3 est un synoptique des principales étapes d'un mode de réalisation du procédé de détermination de périodicité des données, mises en œuvre par le ou les processeurs de calcul 34 du dispositif de calcul et de commande 24.

La première étape 50 est une étape d'obtention des données à traiter, ainsi que des valeurs d'attributs associés.

Par exemple, dans le cas où les données à traiter sont des impulsions de signaux radioélectriques reçus par un dispositif récepteur, plusieurs attributs des signaux sont obtenus du récepteur ou calculés à l'étape 50 : date d'arrivée, fréquence d'émission, durée d'impulsion et niveau de réception associé. D'autres attributs comme la direction d'arrivée du signal ou la position de l'émetteur peuvent également être calculés et mémorisés.

Dans une application, les signaux radioélectriques sont émis par une pluralité d'émetteurs et les impulsions en provenance de cette pluralité d'émetteurs sont reçues imbriquées dans le temps. La détection d'une périodicité pour un sous-ensemble d'impulsions indique une provenance d'un même émetteur de signaux radioélectriques.

Lors d'une étape 52 de détermination de correspondance entre les attributs des données à traiter et la représentation graphique, on détermine quels attributs sont à représenter dans un référentiel de représentation cylindrique.

Chaque donnée à traiter est représentée par un objet d'affichage, de forme géométrique donnée, dans le référentiel de représentation décrit plus en détail ci-après.

La forme géométrique d'un objet d'affichage est soit prédéterminée, soit choisie interactivement par l'opérateur dans un catalogue de formes possibles.

Par exemple, on utilise un cube de taille prédéterminée. En variante, on peut envisager une forme de sphère, de taille prédéterminée également.

Dans un mode de réalisation, les objets d'affichage sont semi-opaques pour visualiser d'éventuelles occlusions.

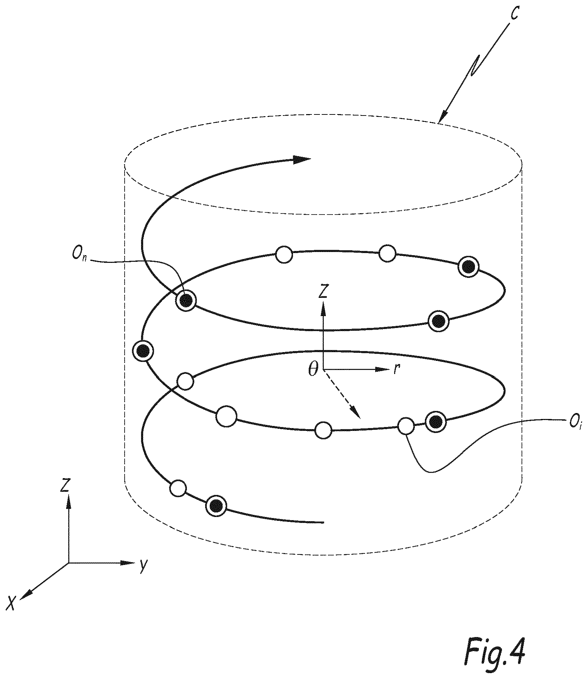

Le référentiel d'affichage utilisé est un référentiel cylindrique. Un cylindre d'affichage C associé à un référentiel cylindrique est illustré à la figure 4, sur lequel sont représentés des objets d'affichage $O_1$,..., $O_i$,..., $O_n$ de forme sphérique.

Le cylindre d'affichage a un rayon R prédéterminé. Par exemple, le rayon R est de 5 mètres de diamètre lorsque le dispositif de visualisation est un dispositif d'immersion dans un environnement virtuel tridimensionnel.

De manière plus générale, le rayon du cylindre est déterminé en fonction des caractéristiques du dispositif de visualisation.

Les coordonnées cylindriques d'un point sont respectivement le rayon r, l'angle $\theta$ dans un plan $(x,y)$ et la hauteur z.

Les coordonnées cylindriques $(r,\theta,z)$ sont liées aux coordonnées cartésiennes $(x,y,z)$ par les formules suivantes :

$$x = r \cdot \cos\theta$$

$$y = r \cdot \sin\theta$$

$$z = z$$

A l'étape 52 on sélectionne un premier attribut qui servira à calculer les coordonnées des objets d'affichage dans le référentiel cylindrique.

Le premier attribut sélectionné est un attribut dont la valeur est quantitativement liée à un ordre, temporel ou autre, dans lequel on cherche à établir une périodicité.

Dans l'exemple des signaux radioélectriques, le premier attribut sélectionné est la date d'arrivée des impulsions.

De plus, optionnellement, on sélectionne un deuxième attribut à distinguer par une caractéristique d'affichage spécifique. Par exemple, le deuxième attribut sélectionné détermine la couleur d'affichage.

Dans l'exemple des signaux radioélectriques le deuxième attribut sélectionné est par exemple la fréquence d'émission, et la caractéristique d'affichage associée est par exemple la couleur d'affichage.

Par exemple, on distingue deux fréquences de signal distinctes, et on associe une couleur différente à chacune de ces fréquences.

En complément, on peut sélectionner d'autres attributs et représenter chacun des autres attributs en utilisant une autre caractéristique visuelle, par exemple la forme, la taille, la profondeur.

De préférence, le nombre d'autres attributs sélectionnés est limité afin de conserver l'ergonomie d'affichage.

La sélection du premier attribut et du ou des deuxième(s) attribut (s) peut être soit programmée d'avance, soit effectuée par un opérateur de manière interactive, via l'interface homme-machine mise à la disposition de l'opérateur.

L'étape 52 de sélection des attributs est suivie d'une étape 54 de calcul des coordonnées dans le référentiel cylindrique. On obtient la série de valeurs $P_i$ du premier attribut sélectionné à partir des données mémorisées à l'étape 50, et on calcule les coordonnées cylindriques correspondantes, avec un coefficient de périodicité p, initialisé à une valeur initiale.

Pour une valeur d'attribut $P_i$ on obtient les coordonnées $(r_i, \theta_i, z_i)$ avec $r_i$ = R, la valeur constante de rayon, et :

$$\theta_i = (P_i \bmod p) \cdot 2\pi$$

$$z_i = f(P_i)$$

Où mod est l'opération modulo qui retourne le reste de la division euclidienne.

La fonction $f(P_i)$ est une fonction affine qui répartit les valeurs d'attribut $P_i$ entre une hauteur minimale et une hauteur maximale du cylindre de représentation.

$f(P_i)$ est par exemple la fonction qui, pour un $P_i$ donné compris entre min $P_i$ et max$P_i$, retourne une hauteur comprise entre une hauteur maximale et une hauteur minimale dans les mêmes proportions que $P_i$ par rapport à min $P_i$ et max$P_i$.

On obtient une représentation en hélice cylindrique des valeurs $P_i$ de l'attribut sélectionné, comme illustré à la figure 4.

Le coefficient de périodicité p définit un pas d'enroulement des objets d'affichage sur le cylindre de représentation.

L'étape 54 est suivie par une étape 56 d'affichage des objets d'affichage dans le référentiel cylindrique.

De préférence, pour chaque valeur d'attribut $P_i$ on affiche un objet d'affichage centré sur le point de coordonnées $(r_i, \theta_i, z_i)$ calculées. En variante, on associe les coordonnées calculées à un autre point de l'objet d'affichage, par exemple un de ses coins lorsque l'objet d'affichage a une forme cubique.

En variante, les étapes 54 et 56 sont regroupées en une seule étape.

L'étape 56 est suivie d'une étape 58 de réception de commande de l'opérateur. L'opérateur transmet ses commandes via le dispositif d'interaction 16, qui est par exemple une manette munie de plusieurs boutons de commande et/ou de zones de commande tactile, sur lesquelles l'opérateur agit par appui et mouvement effectué avec un ou plusieurs doigts.

L'opérateur a la possibilité de commander une modification de l'enroulement des objets d'affichage sur le cylindre d'affichage, ce qui induit une modification du coefficient de périodicité p.

Par exemple, une commande de type « glissé de doigt » sur une zone de commande tactile, dans une direction sélectionnée par l'opérateur, induit une modification continue du coefficient de périodicité jusqu'à un point d'arrêt associé à la fin de course du doigt de l'opérateur sur la zone tactile de commande.

Dans ce mode de réalisation, le sens et la distance parcourue par le du doigt de l'opérateur sur la zone de commande tactile dédiée à la fonctionnalité de modification de l'enroulement sont converties par calcul en une modification correspondante, en plus ou en moins, du coefficient de périodicité p.

En variante, l'opérateur peut actionner par pression un bouton pour déclencher la modification du pas d'enroulement correspondant à une modification du coefficient de périodicité. De préférence, un appui long déclenche une modification continue, et le relâchement du bouton induit l'arrêt de la modification du pas d'enroulement. Par exemple, deux boutons sont utilisés, un premier bouton pour augmenter le coefficient de périodicité et un deuxième bouton pour diminuer le coefficient de périodicité.

Bien entendu, il est possible d'envisager d'autres variantes d'implémentation des interactions avec l'opérateur pour la modification du pas d'enroulement.

La réception 58 d'une commande de modification de l'enroulement entraîne le calcul d'un coefficient de périodicité modifié associé, et un nouveau calcul 54 des coordonnées cylindriques des objets d'affichage suivi un rafraîchissement de l'affichage (étape 56). Ces étapes sont itérées quasiment en temps réel, et par conséquent l'affichage est rafraîchi en temps réel, avec un coefficient de périodicité p courant.

Grâce au rafraîchissement d'affichage en temps réel, l'opérateur peut visualiser en temps réel le déplacement des objets d'affichage et la modification de leur enroulement sur le cylindre d'affichage, cette modification de l'enroulement correspondant à la modification du coefficient de périodicité.

L'opérateur a ainsi la possibilité de modifier de manière dynamique et interactive le coefficient de périodicité, tout en visualisant les objets d'affichage correspondants. Grâce aux propriétés perceptives humaines, l'opérateur peut ainsi facilement aligner des objets d'affichage, un ensemble d'objets d'affichage alignés verticalement correspondant à une périodicité selon l'attribut représenté de période fixe.

Plus généralement, l'opérateur peut détecter à tout moment la formation par un groupe d'objets d'affichage d'un motif géométrique sensiblement proche d'un motif géométrique récurrent continu autre qu'un alignement, par exemple un motif sinusoïdal, en triangles ou en dents de scie.

Les figures 5, 6 et 7 illustrent schématiquement un espace d'affichage 70 dans un espace tridimensionnel d'affichage, comportant un cylindre d'affichage 72. Un opérateur 74 a été schématisé dans les figures pour illustrer le point de vue de l'opérateur réel dans l'environnement tridimensionnel virtuel : le point de vue de l'opérateur est situé à l'intérieur du cylindre d'affichage 72.

Des objets d'affichage 76, 78 sont affichés sur la totalité de la surface latérale du cylindre.

Dans le mode de réalisation illustré, les objets d'affichage ont une forme de cube, de dimension déterminée en fonction de la taille du cylindre d'affichage et/ou du nombre de données à traiter.

Les dimensions de rayon et de hauteur du cylindre sont prédéterminées, par exemple en fonction de considérations ergonomiques d'utilisation, comme la taille moyenne d'un opérateur.

L'opérateur 74 a un angle de vision lui permettant de visualiser un secteur 80 du cylindre d'affichage.

Dans ce mode de réalisation, l'opérateur a la possibilité de tourner afin de visualiser la totalité du cylindre d'affichage, par exemple en tournant sur lui-même.

De manière plus générale, si le dispositif de visualisation n'est pas un dispositif immersif, l'opérateur a la possibilité d'effectuer une rotation du cylindre d'affichage de manière à ramener dans son champ visuel, secteur par secteur, la totalité du cylindre d'affichage.

Dans l'exemple, les objets d'affichage 76 et 78 ont la même forme mais se distinguent visuellement par leur surface, par exemple par la couleur ou la texture, en lien avec le deuxième attribut sélectionné à l'étape 52.

Par exemple, il s'agit de la fréquence d'émission pour des données représentatives d'impulsions de signaux radioélectriques.

Dans l'exemple de la figure 5, les objets d'affichage 76, 78 sont répartis sur la surface latérale du cylindre d'affichage 72 en fonction de leurs coordonnées dans le référentiel cylindrique, calculées sur le premier attribut avec le coefficient de périodicité courant, noté p.

L'opérateur a la possibilité de commander la modification de l'enroulement des objets d'affichage 76, 78, comme expliqué ci-dessus.

Grâce à la visualisation interactive lors de la modification de l'enroulement, les objets d'affichage 76 sont sensiblement alignés en plusieurs groupes 82, 84, 86.

Avantageusement, l'opérateur humain détecte les alignements de manière robuste aux erreurs ponctuelles correspondant aux valeurs d'attribut bruitées ou aux données manquantes. La visualisation immersive est particulièrement adaptée pour faciliter ce travail par l'opérateur.

Lorsque plusieurs attributs sont associés aux caractéristiques d'affichage, les groupes d'objets d'affichage sélectionnés sont composés d'objets ayant les mêmes caractéristiques de couleur, forme, etc, formant un motif géométrique cohérent qui est un alignement vertical dans l'exemple.

Lorsque l'opérateur détecte un alignement d'objets d'affichage satisfaisant, il a la possibilité de sélectionner un groupe d'objets d'affichage alignés ou sensiblement alignés, par l'intermédiaire du dispositif d'interaction 28, ce groupe correspondant à des données de signal correspondantes.

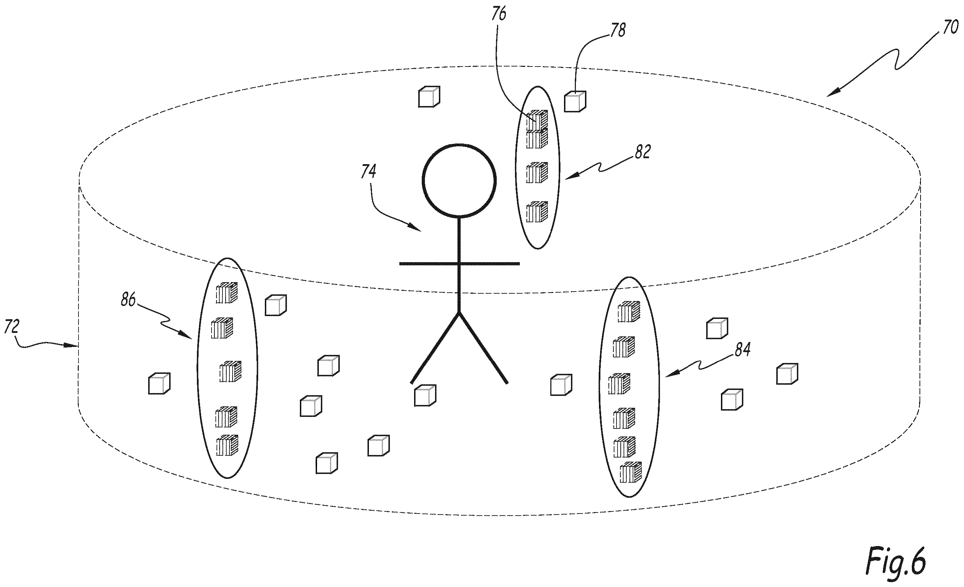

Par exemple, l'opérateur sélectionne le groupe 84 de la figure 6.

La commande de sélection d'un groupe d'objets d'affichage est reçue à l'étape 60 du procédé.

De préférence, l'affichage est rafraîchi en modifiant une caractéristique d'affichage ou en ajoutant un indicateur visuel pour indiquer le sous-ensemble de données sélectionné.

Par exemple, les objets d'affichage deviennent opaques lorsqu'ils sont sélectionnés.

En variante, l'indicateur visuel consiste à entourer le groupe d'objets sélectionnés, comme montré à la figure 6.

Optionnellement, on fournit à l'opérateur une fonction de regroupement en indiquant le nombre N, qui a pour effet de diviser le coefficient de périodicité par N. Cette fonction optionnelle permet, le cas échéant, d'affiner le coefficient de périodicité facilement lorsque l'opérateur détecte un nombre N de groupes d'objets d'affichage ayant les mêmes caractéristiques visuelles (forme, couleur par exemple) et répartis régulièrement sur le cylindre. Par exemple dans la figure 6, trois groupes d'objets d'affichage sensiblement alignés, 82, 84 et 86 sont détectés, donc N = 3.

De préférence, le dispositif d'interaction 16 permet à l'opérateur d'indiquer simplement le nombre N pour regroupement, par exemple via une interface de type pavé numérique.

Lorsqu'une commande de regroupement de N groupes d'objets d'affichages alignés est reçue à l'étape 61, le coefficient de périodicité p est modifié par une opération calculatoire et prend la valeur $\frac{p}{N}$.

L'affichage est rafraîchi après calcul des coordonnées cylindriques avec la valeur de coefficient de périodicité modifié.

L'étape 61 peut se dérouler en parallèle, avant ou après l'étape 60.

La commande de sélection de groupe d'objets d'affichage alignés 60 ou de regroupement de N groupes d'objets est suivie de la mémorisation 62 du coefficient de périodicité d'affichage courant pour les données correspondant au groupe d'objets d'affichage sélectionné.

Optionnellement, le groupe d'objets d'affichage alignés sélectionné est déplacé vers une zone de visualisation secondaire, suite à une commande de déplacement de l'opérateur reçue à l'étape 64.

L'espace d'affichage secondaire est par exemple à la périphérie de l'espace d'affichage tridimensionnel dans le cas d'un dispositif de visualisation immersif, ou une fenêtre d'écran située sur un côté de l'écran principal d'affichage.

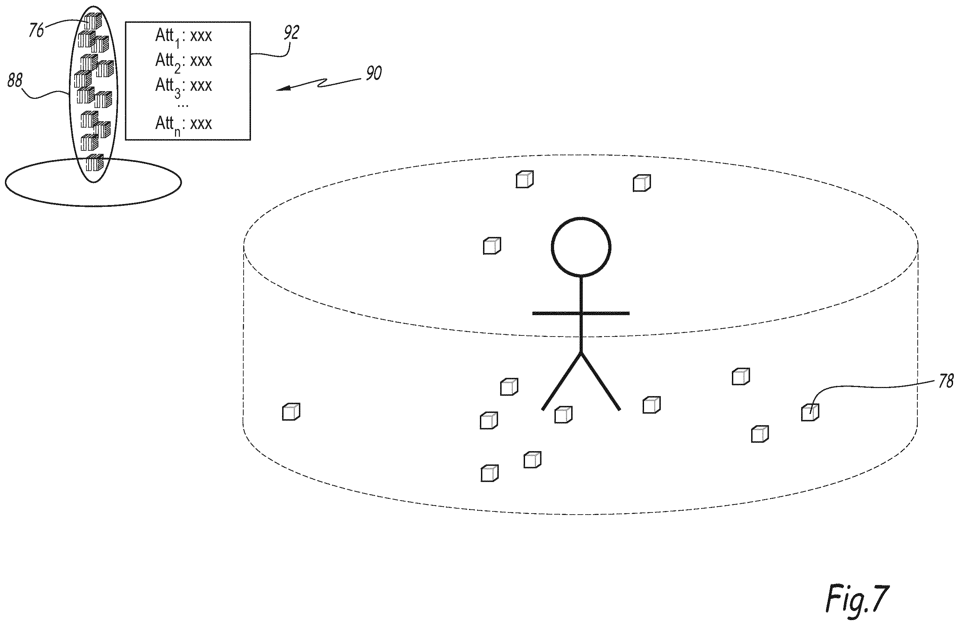

La figure 7 illustre un exemple d'espace d'affichage secondaire 90, situé dans l'environnement d'affichage tridimensionnel sur un côté de l'espace d'affichage principal 70.

Dans le mode de réalisation illustré schématiquement à la figure 7, la totalité des objets d'affichage 76 a été regroupée en un groupe 88, puis déplacée par une commande d'opérateur vers l'espace d'affichage secondaire 90.

La possibilité de déplacer les objets d'affichage représentatifs des données déjà traitées, pour lesquelles une périodicité a été détectée, permet d'alléger l'espace d'affichage principal 70, et donc de faciliter la tâche de l'opérateur pour le traitement des données restantes.

Dans le mode de réalisation dans lequel le dispositif de visualisation est un dispositif immersif, grâce à une commande à l'aide d'un dispositif de pointage, l'opérateur a la possibilité de s'approcher et de rentrer virtuellement dans l'espace d'affichage secondaire 90. La position des objets d'affichage par rapport au champ visuel de l'opérateur est modifiée.

Dans un mode de réalisation sur écran, on peut envisager la possibilité d'effectuer un zoom sur la zone d'affichage secondaire, ou un affichage par fenêtres, que l'opérateur peut ouvrir ou fermer par l'intermédiaire d'une commande.

Ainsi, l'opérateur a la possibilité d'étudier plus en détail les données sélectionnées présentant une périodicité pour le premier attribut sélectionné.

Une commande supplémentaire de l'opérateur reçue à l'étape 66 entraîne un affichage 68 des diverses valeurs d'attributs $Att_1$, $Att_2$,... $Att_n$ des données correspondant aux objets d'affichage sélectionnés, permettant à l'opérateur de vérifier/valider la périodicité détectée grâce à la visualisation interactive.

Par exemple, les valeurs d'attributs sont affichées textuellement dans une fenêtre 92.

Avantageusement, l'invention permet de tirer parti des propriétés perceptives et des capacités de détection pré-attentives, pour une détermination de périodicité rapide et robuste par un opérateur.

L'invention a été décrite ci-dessus dans le cas particulier où un opérateur détecte des objets d'affichage sensiblement alignés, l'alignement correspondant à une période fixe selon le premier attribut représenté dans le référentiel cylindrique.

En variante, la formation d'autres motifs géométriques par les objets d'affichage peut également être détectée par un opérateur, comme par exemple la formation d'un motif géométrique récurrent continu, d'axe sensiblement vertical, de type, par exemple, sinusoïdal, en triangles ou en dents de scie. Comme dans le cas de l'alignement, l'opérateur a la capacité de détecter un tel motif géométrique de manière robuste à quelques décalages de placement d'objets d'affichage, correspondant à du bruit. Un axe légèrement incliné par rapport à la verticale peut être détecté par un opérateur.

De préférence, l'opérateur ajuste le pas d'enroulement pour obtenir un axe sensiblement vertical, le pas de périodicité correspondant alors à une période moyenne de répétition des données correspondant aux objets d'affichage sélectionnés.

Par exemple, un motif géométrique vertical récurrent continu de type sinusoïdal, en triangles ou en dents de scie correspond à une modulation de l'attribut analysé, respectivement, en sinus, en triangles ou en dents de scie.

De manière plus générale, la détection d'un motif géométrique donné permet de déduire une forme de variation de la périodicité des données selon l'attribut analysé.

De plus, grâce à la possibilité de sélectionner et de déplacer des groupes d'objets d'affichage, l'invention permet de déterminer la périodicité de plusieurs séries de données mélangées, et par exemple de séparer des signaux périodiques imbriqués et/ou bruités.

**Revendications**

1. Procédé de détermination de périodicité de données **caractérisées par** une pluralité d'attributs, au moins un sous ensemble des données comportant une périodicité associée à un des attributs, **caractérisé en ce qu'**il comporte des étapes de :

   - obtention (50) des valeurs d'attribut caractérisant chaque donnée à traiter,
   - sélection (52) d'un premier attribut, et calcul (54), pour chaque donnée à traiter, de coordonnées dans un référentiel cylindrique, les coordonnées comportant une valeur angulaire en fonction de la valeur dudit premier attribut pour la donnée à traiter et d'un coefficient de périodicité, et une hauteur,
   - affichage (56) d'objets d'affichage sur un cylindre d'affichage tridimensionnel, chaque objet d'affichage (76, 78) correspondant à une donnée à traiter et étant positionné sur le cylindre d'affichage (72) en fonction des coordonnées calculées, au moins un secteur (80) du cylindre d'affichage tridimensionnel étant visualisable par un opérateur,
   - en réponse à une commande d'enroulement (58) des objets d'affichage sur le cylindre d'affichage, modification (58) du coefficient de périodicité en un coefficient de périodicité courant et rafraîchissement (56) de l'affichage,
   - obtention (60) d'un groupe (82, 84, 86) d'objets d'affichage (76, 78) sélectionné formant sensiblement un motif géométrique prédéterminé, ledit groupe (82, 84, 86) d'objets d'affichage correspondant à un sous-ensemble de données présentant une périodicité selon le premier attribut.

2. Procédé de détermination de périodicité selon la revendication 1, dans lequel ledit motif géométrique est un alignement vertical, et dans lequel, le sous-ensemble de données correspondant au groupe d'objets d'affichage sélectionné a une période moyenne selon le premier attribut de valeur égale au coefficient de périodicité courant.

3. Procédé de détermination de périodicité selon la revendication 1, dans lequel ledit motif géométrique est un motif récurrent continu de type sinusoïdal, en triangles ou en dents de scie correspondant à une modulation périodique du premier attribut.

4. Procédé de détermination de périodicité selon l'une des revendications 1 à 3, dans lequel la hauteur dans le référentiel cylindrique est calculée par une fonction affine de la valeur dudit premier attribut.

5. Procédé de détermination de périodicité selon l'une des revendications 1 à 4, comportant la sélection (52) d'au moins un deuxième attribut parmi la pluralité d'attributs caractérisant les données, et l'association d'une caractéristique visuelle distinctive à chaque objet d'affichage en fonction du deuxième attribut sélectionné.

6. Procédé de détermination de périodicité selon la revendication 5, dans lequel les objets d'affichage (76) sélectionnés pour former un groupe ont une même caractéristique visuelle distinctive associée à un deuxième attribut sélectionné.

7. Procédé de détermination de périodicité selon l'une des revendications 1 à 6, dans lequel les objets d'affichage (76, 78) sont affichés dans un espace d'affichage tridimensionnel principal (70), le procédé comportant en outre, après la sélection d'un groupe d'objets d'affichage, le déplacement du groupe d'objets d'affichage vers un espace d'affichage tridimensionnel secondaire (90) distinct de l'espace d'affichage tridimensionnel principal.

8. Procédé de détermination de périodicité selon l'une des revendications 1 à 7, comportant en outre un affichage (68) détaillé de valeurs d'attributs associées au groupe d'objets d'affichage sélectionné.

9. Procédé de détermination de périodicité selon l'une des revendications 1 à 8, dans lequel la commande d'enroulement des objets d'affichage sur le cylindre d'affichage est effectuée de manière quasi continue par l'opérateur, et le rafraîchissement de l'affichage est effectué sensiblement en temps réel.

10. Procédé de détermination de périodicité selon l'une des revendications 1 à 9, comportant en outre une réception de commande (61) indiquant un nombre de groupes d'objets d'affichage à regrouper, suivie d'un calcul d'un coefficient de périodicité modifié en fonction du nombre indiqué et d'un rafraîchissement de l'affichage.

11. Procédé de détermination de périodicité selon l'une des revendications 1 à 10, dans lequel les données à traiter sont représentatives d'impulsions de signaux radioélectriques périodiques imbriqués et/ou bruités.

12. Procédé de détermination de périodicité selon l'une des revendications 1 à 11, dans lequel l'affichage est un affichage d'immersion dans un environnement virtuel tridimensionnel, le point de vue de l'opérateur étant situé à l'intérieur du cylindre d'affichage.

13. Système de détermination de périodicité de données **caractérisées par** une pluralité d'attributs, au moins un sous ensemble des données comportant un motif de répétition associé à un des attributs, **caractérisé en ce qu'**il comporte :

   - une interface homme-machine (12) comportant un dispositif de visualisation (14, 18) permettant une visualisation en trois dimensions, et un dispositif d'interaction (16, 28) permettant de recevoir des commandes d'un opérateur,
   - un dispositif (24) de calcul et de commande connecté à l'interface homme-machine et adapté à commander l'affichage,

   le dispositif (24) de calcul et de commande comportant au moins un processeur adapté à :

   - obtenir des valeurs d'attribut caractérisant chaque donnée à traiter,
   - déterminer un premier attribut, et calculer, pour chaque donnée à traiter, des coordonnées dans un référentiel cylindrique, les coordonnées comportant une valeur angulaire en fonction de la valeur dudit premier attribut pour la donnée à traiter et d'un coefficient de périodicité, et une hauteur,
   - commander l'affichage d'objets d'affichage (76, 78) sur un cylindre d'affichage (72) tridimensionnel, chaque objet d'affichage (76, 78) correspondant à une donnée à traiter et étant positionné sur le cylindre d'affichage (72) en fonction des coordonnées calculées, au moins un secteur (80) du cylindre d'affichage tridimensionnel étant visualisable par un opérateur,
   - recevoir du dispositif d'interaction (16) une commande d'enroulement des objets d'affichage sur le cylindre d'affichage, et en réponse à ladite commande d'enroulement, calculer un coefficient de périodicité courant et commander le rafraîchissement de l'affichage,
- recevoir du dispositif d'interaction (16) une commande de sélection d'un groupe (82, 84, 86) d'objets d'affichage formant sensiblement un motif géométrique prédéterminé, ledit groupe d'objets d'affichage correspondant à un sous-ensemble de données présentant une périodicité selon le premier attribut.

14. Système de détermination de périodicité selon la revendication 13, dans lequel le dispositif de visualisation (14) est un dispositif d'immersion dans un environnement virtuel tridimensionnel, et le dispositif d'interaction (16) comporte au moins une manette (28) de pointage et de sélection d'objets d'affichage dans l'environnement virtuel.

15. Système de détermination de périodicité selon la revendication 14, dans le point de vue de l'opérateur est situé à l'intérieur du cylindre d'affichage.

**Patentansprüche**

1. Verfahren zur Bestimmung der Periodizität von Daten, die durch eine Vielzahl von Attributen gekennzeichnet sind, wobei mindestens eine Untereinheit der Daten eine Periodizität aufweist, die einem der Attribute zugeordnet ist, **dadurch gekennzeichnet, dass** es die folgenden Schritte aufweist:

- Erhalten (50) der Attributwerte, die jeden zu verarbeitenden Datenwert kennzeichnen,
- Auswählen (52) eines ersten Attributs und Berechnen (54), für jeden zu verarbeitenden Datenwert, von Koordinaten in einem zylindrischen Bezugssystem, wobei die Koordinaten einen Winkelwert in Abhängigkeit vom Wert des ersten Attributs für den zu verarbeitenden Datenwert und einem Periodizitätskoeffizienten und eine Höhe aufweisen,
- Anzeigen (56) von Anzeigeobjekten auf einem dreidimensionalen Anzeigezylinder, wobei jedes Anzeigeobjekt (76, 78) einem zu verarbeitenden Datenwert entspricht auf dem Anzeigezylinder (72) in Abhängigkeit von den berechneten Koordinaten positioniert ist, wobei mindestens ein Sektor (80) des dreidimensionalen Anzeigezylinders von einem Bediener visualisierbar ist,
- als Antwort auf einen Wickelbefehl (58) der Anzeigeobjekte auf dem Anzeigezylinder, Ändern (58) des Periodizitätskoeffizienten in einen laufenden Periodizitätskoeffizienten und Auffrischen (56) der Anzeige,
- Erhalten (60) einer ausgewählten Gruppe (82, 84, 86) von Anzeigeobjekten (76, 78), die etwa ein vorher festgelegtes geometrisches Motiv bilden, wobei die Anzeigeobjektgruppe (82, 84, 86) einer Datenuntereinheit entspricht, die eine Periodizität gemäß dem ersten Attribut aufweist.

2. Verfahren zur Bestimmung der Periodizität nach Anspruch 1, wobei das geometrische Motiv eine vertikale Aneinanderreihung ist und wobei die Datenuntereinheit, die der ausgewählten Anzeigeobjektgruppe entspricht, eine mittlere Periode gemäß dem ersten Attribut mit einem Wert hat, der gleich dem laufenden Periodizitätskoeffizienten ist.

3. Verfahren zur Bestimmung der Periodizität nach Anspruch 1, wobei das geometrische Motiv ein kontinuierliches sich wiederholendes Motiv vom Sinustyp, in Dreiecken oder in Sägezähnen ist, das einer periodischen Modulierung des ersten Attributs entspricht.

4. Verfahren zur Bestimmung der Periodizität nach einem der Ansprüche 1 bis 3, wobei die Höhe im zylindrischen Bezugssystem von einer affinen Funktion des Werts des ersten Attributs berechnet wird.

5. Verfahren zur Bestimmung der Periodizität nach einem der Ansprüche 1 bis 4, aufweisend die Auswahl (52) von mindestens einem zweiten Attribut aus der Vielzahl von Attributen, die die Daten kennzeichnen, und die Zuordnung eines distinktiven visuellen Merkmals zu jedem Anzeigeobjekt in Abhängigkeit vom ausgewählten zweiten Attribut.

6. Verfahren zur Bestimmung der Periodizität nach Anspruch 5, wobei die Anzeigeobjekte (76), die ausgewählt wurden, um eine Gruppe zu bilden, dasselbe distinktive visuelle Merkmal haben, das einem ausgewählten zweiten Attribut zugeordnet ist.

7. Verfahren zur Bestimmung der Periodizität nach einem der Ansprüche 1 bis 6, wobei die Anzeigeobjekte (76, 78) in einem dreidimensionalen Hauptanzeigebereich (70) angezeigt werden, wobei das Verfahren ferner nach der Auswahl einer Gruppe von Anzeigeobjekten die Verlagerung der Gruppe von Anzeigeobjekten zu einem sekundären dreidimensionalen Anzeigeraum (90) aufweist, der von dem dreidimensionalen Hauptanzeigeraum unterschiedlich ist.

8. Verfahren zur Bestimmung der Periodizität nach einem der Ansprüche 1 bis 7, aufweisend ferner eine detaillierte Anzeige (68) von Attributwerten, die der ausgewählten Anzeigeobjektgruppe zugeordnet sind.

9. Verfahren zur Bestimmung der Periodizität nach einem der Ansprüche 1 bis 8, wobei der Wickelbefehl der Anzeigeobjekte auf dem Anzeigezylinder quasi kontinuierlich vom Bediener durchgeführt wird und die Auffrischung der Anzeige etwa in Echtzeit durchgeführt wird.

10. Verfahren zur Bestimmung der Periodizität nach einem der Ansprüche 1 bis 9, aufweisend ferner einen Empfangsbefehl (61), der eine Anzahl von erneut zu gruppierenden Anzeigeobjektgruppen angibt, gefolgt von einer Berechnung eines in Abhängigkeit von der angegebenen Anzahl und einer Auffrischung der Anzeige geänderten Periodizitätskoeffizienten.

11. Verfahren zur Bestimmung der Periodizität nach einem der Ansprüche 1 bis 10, wobei die zu verarbeitenden Daten für Impulse von verschachtelten und/oder verrauschten periodischen radioelektrischen Signalen repräsentativ sind.

12. Verfahren zur Bestimmung der Periodizität nach einem der Ansprüche 1 bis 11, wobei die Anzeige eine Immersionsanzeige in einer dreidimensionalen virtuellen Umgebung ist, wobei sich der Blickpunkt des Bedieners im Inneren des Anzeigezylinders befindet.

13. System zur Bestimmung der Periodizität von Daten, das durch eine Vielzahl von Attributen gekennzeichnet ist, wobei mindestens eine Untereinheit der Daten ein Wiederholungsmotiv aufweist, das einem der Attribute zugeordnet ist, **dadurch gekennzeichnet, dass** es aufweist:

    - eine Mensch-Maschine-Schnittstelle (12), die eine Visualisierungsvorrichtung (14, 18) aufweist, die eine Visualisierung in drei Dimensionen erlaubt, und eine Interaktionsvorrichtung (16, 28), die erlaubt, Befehle von einem Bediener zu empfangen,
    - eine Berechnungs- und Steuervorrichtung (24), die mit der Mensch-Maschine-Schnittstelle verbunden und geeignet ist, die Anzeige zu steuern,

    wobei die Berechnungs- und Steuervorrichtung (24) mindestens einen Prozessor aufweist, der geeignet ist:

    - Attributwerte zu erhalten, die jeden zu verarbeitenden Datenwert kennzeichnen,
    - ein erstes Attribut zu bestimmen und für jeden zu verarbeitenden Datenwert Koordinaten in einem zylindrischen Bezugssystem zu berechnen, wobei die Koordinaten einen Winkelwert in Abhängigkeit vom Wert des ersten Attributs für den zu verarbeitenden Datenwert und einem Periodizitätskoeffizienten und eine Höhe aufweisen,
    - die Anzeige von Anzeigeobjekten (76, 78) auf einem dreidimensionalen Anzeigezylinder (72) zu steuern, wobei jedes Anzeigeobjekt (76, 78) einem zu verarbeitenden Datenwert entspricht und auf dem Anzeigezylinder (72) in Abhängigkeit von den berechneten Koordinaten positioniert ist, wobei mindestens ein Sektor (80) des dreidimensionalen Anzeigezylinders von einem Bediener visualisierbar ist,
    - von der Interaktionsvorrichtung (16) einen Wickelbefehl der Anzeigeobjekte auf dem Anzeigezylinder zu erhalten und als Antwort auf den Wickelbefehl einen laufenden Periodizitätskoeffizienten zu berechnen und die Auffrischung der Anzeige zu steuern,
    - von der Interaktionsvorrichtung (16) einen Auswahlbefehl einer Gruppe (82, 84, 86) von Anzeigeobjekten zu erhalten, die etwa ein vorher festgelegtes geometrisches Motiv bilden, wobei die Anzeigeobjektgruppe einer Datenuntereinheit entspricht, die eine Periodizität gemäß dem ersten Attribut aufweist.

14. System zur Bestimmung der Periodizität nach Anspruch 13, wobei die Visualisierungsvorrichtung (14) eine Immersionsvorrichtung in eine dreidimensionale virtuelle Umgebung ist und die Interaktionsvorrichtung (16) mindestens einen Handgriff (28) zum Ansteuern und Auswählen von Anzeigeobjekten in der virtuellen Umgebung aufweist.

15. System zur Bestimmung der Periodizität nach Anspruch 14, wobei sich der Blickpunkt des Bedieners im Inneren des Anzeigezylinders befindet.

**Claims**

1. A method for determining the periodicity of data **characterized by** a plurality of attributes, at least one subset of the data including a periodicity associated with one of the attributes, **characterized in that** it includes the steps of:

    - obtaining (50) attribute values characterizing each datum to be processed,
    - selecting (52) a first attribute, and calculating (54), for each datum to be processed, coordinates in a cylindrical frame of reference, the coordinates including an angular value based on the value of said first attribute for the datum to be processed and a periodicity coefficient, and a height,
    - displaying (56) display objects on a three-dimensional display cylinder, each display object (76, 78) corresponding to a datum to be processed and being positioned on the display cylinder (72) based on the calculated coordinates, at least one sector (80) of the three-dimensional display cylinder being viewable by an operator,
- in response to a winding command (58) of the display objects on the display cylinder, modifying (58) the periodicity coefficient into a current periodicity coefficient and refreshing (56) the display,
- obtaining (60) a group (82, 84, 86) of selected display objects (76, 78) substantially forming a predetermined geometric pattern, said group (82, 84, 86) of display objects corresponding to a subset of data having a periodicity according to the first attribute.

2. The method for determining a periodicity according to claim 1, wherein said geometric pattern is a vertical alignment, and wherein the data subset corresponding to the selected group of display objects has a mean period according to the first attribute of value equal to the current periodicity coefficient.

3. The method for determining a periodicity according to claim 1, wherein said geometric pattern is a continuous recurrent pattern of the sinusoidal type, in triangles or in saw teeth corresponding to a periodic modulation of the first attribute.

4. The method for determining a periodicity according to one of claims 1 to 3, wherein the height in the cylindrical frame of reference is calculated by an affine function of the value of said first attribute.

5. The method for determining a periodicity according to one of claims 1 to 4, including selecting (52) at least one second attribute among the plurality of attributes characterizing the data, and associating a distinctive visual characteristic with each display object based on the second selected attribute.

6. The method for determining a periodicity according to claim 5, wherein the display objects (76) selected to form a group have a same distinctive visual characteristic associated with a second selected attribute.

7. The method for determining a periodicity according to one of claims 1 to 6, wherein the display objects (76, 78) are displayed in a main three-dimensional display area (70), the method further including, after selecting a group of display objects, moving the group of display objects toward a secondary three-dimensional display area (90) separate from the main three-dimensional display area.

8. The method for determining a periodicity according to one of claims 1 to 7, further including a detailed display (68) of attribute values associated with the selected group of display objects.

9. The method for determining a periodicity according to one of claims 1 to 8, wherein the winding command of the display objects on the display cylinder is done quasi-continuously by the operator, and the display is refreshed substantially in real time.

10. The method for determining a periodicity according to one of claims 1 to 9, further including receiving a command (61) indicating a number of groups of objects to be displayed to be grouped together, followed by calculating a periodicity coefficient modified based on the indicated number and a refresh of the display.

11. The method for determining a periodicity according to one of claims 1 to 10, wherein the data to be processed are representative of interleaved and/or noised periodic wireless signal pulses.

12. The method for determining a periodicity according to one of claims 1 to 11, wherein the display is an immersion display in a three-dimensional virtual environment, the operator's point of view being located inside the display cylinder.

13. A system for determining a periodicity of data **characterized by** a plurality of attributes, at least one subset of the data including a repetition pattern associated with one of the attributes, **characterized in that** it includes:

    - a man-machine interface (12) including a viewing device (14, 18) allowing viewing in three dimensions, and an interaction device (16, 28) allowing commands from an operator to be received,
    - a calculating and control device (24) connected to the man-machine interface and suitable for controlling the display,

    the calculating and control device (24) including at least one processor suitable for:

    - obtaining attribute values characterizing each datum to be processed,
    - determining a first attribute, and calculating, for each datum to be processed, coordinates in a cylindrical frame of reference, the coordinates including an angular value based on the value of said first attribute for the datum to be processed and a periodicity coefficient, and a height,
    - commanding the display of display objects (76, 78) on a three-dimensional display cylinder (72), each display object (76, 78) corresponding to a datum to be processed and being positioned on the display cylinder (72) based on the calculated coordinates, at least one sector (80) of the three-dimensional display cylinder being viewable by an operator,
- receiving, from the interaction device (16), a winding command of the display objects on the display cylinder, and in response to said winding command, calculating a current periodicity coefficient and commanding the refresh of the display,
- receiving, from the interaction device (16), a selection command for a group (82, 84, 86) of display objects substantially forming a predetermined geometric pattern, said group of display objects corresponding to a subset of data having a periodicity according to the first attribute.

14. The system for determining periodicity according to claim 13, wherein the viewing device (14) is an immersion device in a three-dimensional virtual environment, and the interaction device (16) includes at least one controller (28) for pointing at and selecting display objects in the virtual environment.

15. The system for determining periodicity according to claim 14, wherein the operator's point of view is located inside the display cylinder.

*Fig.1*

Fig.2

```
┌─────────────────────────────┐
│  Réception donées/attributs  │──╮ 50
└─────────────────────────────┘
              │
              ▼
┌─────────────────────────────┐
│  Sélection attributs à afficher │──╮ 52
└─────────────────────────────┘
              │
              ▼
┌─────────────────────────────┐
│  Calcul coordonnées référentiel │──╮ 54
│  cylindrique avec coefficient p │
└─────────────────────────────┘
              │
              ▼
┌─────────────────────────────┐
│  Affichage d'objets graphiques │──╮ 56
└─────────────────────────────┘
              │
              ▼
┌─────────────────────────────┐
│  Réception commande          │──╮ 58
│  d'enroulement/mise à jour coefficient p │
└─────────────────────────────┘
              │
              ▼
┌─────────────────────────────┐
│  Réception commande sélection groupe │──╮ 60
│  et rafraîchissement affichage │
└─────────────────────────────┘
              │
              ▼
┌─────────────────────────────┐
│  Réception commande regroupement │──╮ 61
└─────────────────────────────┘
              │
              ▼
┌─────────────────────────────┐
│  Mémorisation coefficient p courant │──╮ 62
└─────────────────────────────┘
              │
              ▼
┌─────────────────────────────┐      ┌─────────────────────────────┐
│  Réception commande déplacement │──╮ 64 │  Rafraîchissement affichage  │──╮ 68
│  groupe selectionné │              │  principal/secondaire        │
└─────────────────────────────┘      └─────────────────────────────┘
              │
              ▼
┌─────────────────────────────┐
│  Réception commande affichage │──╮ 66
│  attributs │
└─────────────────────────────┘
```

Fig.3

*Fig.4*

Fig.5

EP 3 607 430 B1

Fig.6

EP 3 607 430 B1

Fig.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2015204973 A

- US 2016026253 A